# FASCICULE DE BREVET EUROPEEN

(11) **EP 0 941 518 B1**
(45) Date de publication et mention de la délivrance du brevet: **01.06.2005**
(21) Numéro de dépôt: 98946530.7
(22) Date de dépôt: 29.09.1998
(51) Int. Cl.: G06K 19/06

(54) **PROCEDE DE CODAGE**
KODIERVERFAHREN
CODING METHOD

(30) Priorité: 30.09.1997 FR 9712142
(43) Date de publication de la demande: 15.09.1999
(73) Titulaire: CENTRE NATIONAL DE LA RECHERCHE SCIENTIFIQUE, 75016 Paris Cédex (FR)
(72) Inventeur: RIVAILLER, Jacques, F-78114 Magny-en-Hameaux (FR)
(74) Mandataire: Breese, Pierre
(86) Numéro de dépôt international: PCT/FR1998/002089
(87) Numéro de publication internationale: WO 1999/017251

(56) Documents cités:
- US-A- 5 126 542
- US-A- 5 602 382

## Description

La présente invention concerne un procédé de marquage d'un produit, ainsi qu'un procédé d'identification de supports (objet quelconque, document papier, plantes, animal, eau) mettant en oeuvre lesdits procédés de marquage.

On connaît dans l'état de la technique le brevet européen N° 80400952.0 décrivant un procédé d'impression d'un texte sur une feuille support consistant à associer à chaque caractère, quelle que soit sa typographie et ses enrichissements, une séquence de caractères codés en numérique. Ces séquences de caractères codés n'ont aucune signification pour le lecteur. Par contre, elles peuvent être retranscrites en caractères d'imprimerie par une machine complémentaire comportant une caméra apte à reconnaître les informations codées, associée à une imprimante d'ordinateur de type connu, commandée par un calculateur opérant le décodage des signaux délivrés par la caméra.

Le procédé susmentionné présente deux avantages. Le premier est de permettre l'inscription sur un support quelconque, en particulier sur un support papier, sous une forme condensée et facile à exploiter par un ordinateur pour la traduction en caractères lisibles. Le deuxième intérêt est de codifier les caractères et de sécuriser l'information écrite et sa transmission par voie câblée ou hertzienne.

Par contre, le procédé sus-mentionné présente des limitations car il n'est pas compatible avec la retranscription d'informations graphiques, par exemple une signature ou une image.

L'art antérieur connaît, par la demande de brevet américain US 5 602 382 (Canada Post Corp. - Ulvr Joseph et al), un code barre pour le courrier possédant un identifiant de contenu des données. Ce document concerne un code à barres pour objets postaux qui utilise des barres possédant chacune quatre états possibles. Deux barres différentes indiquent le début du code et les deux mêmes barres dans le même ordre indiquent la fin du code. Les barres de début sont suivies d'un identificateur de contenu d'information (DCI) qui indique la structure et la longueur du champ d'information qui suit de sorte qu'une fois le code lu, ce champ sera reconnu et lu correctement. L'utilisation de l'identificateur de contenu d'information (DCI) permet d'utiliser le code pour différentes applications du type client et du type service postal pour lesquelles la structure, la longueur et le contenu du code varient. Le champ information peut contenir un code postal avec ou sans repère d'adresse, un identificateur machine ID, des informations client et des informations de service. Le code peut comporter un champ pour le code pays pour les objets postaux qui sont expédiés vers un pays différent. Le code peut également comporter un champ indiquant si le mot de code est complet ou s'il doit être concaténé au mot de code suivant ou au mot de code précédent. La protection contre les erreurs est obtenue dans tous les cas par l'utilisation d'un champ de parité Reed-Solomon (parité RS) qui suit le champ information. Pour les codes de type client, ce champ de parité peut être raccourci par rapport à celui utilisé pour les codes de type service postal car la probabilité d'erreurs est inférieure lorsque le code est imprimé par le client, étant donné que celui-ci a plus de contrôle sur la qualité du papier, la couleur, les marques superflues, etc. La revendication 1 a été délimitée par rapport à ce document.

L'art antérieur connaît également, par la demande de brevet américain US 5 126 542 (International Data Matrix - Priddy Dennis G et al), un code binaire dynamiquement variable et lisible par une machine, un procédé pour la lecture et la production du code. Cette demande de brevet américain porte sur un code binaire lisible par une machine qui est dynamiquement variable en taille, format et densité d'informations. Le code binaire est formé par une matrice possédant un périmètre et contenant des données. Le périmètre est fourni avec un indice de densité pour indiquer la densité de données contenues dans la matrice. Le périmètre est aussi fourni avec un indice de taille pour indiquer la taille de la matrice. En utilisant l'indice de densité et l'indice de taille, un dispositif de balayage est capable de calculer la taille et la densité d'informations du code binaire.

Les procédés de l'art antérieur se traduisent par l'inscription sur un support, par exemple une étiquette, d'un ensemble de pixels habituellement blanc ou noir, de forme généralement rectangulaire, ronde ou carrée. Les défauts d'impression peuvent aboutir à des recouvrements partiels de pixels adjacents, ou à des déformations des pixels imprimés, se traduisant par des décodages erronés de l'information.

On connaît également le codage à l'aide de code à barres faisant l'objet d'une normalisation internationale. Ces code barres sont adaptés pour des applications de grande diffusion, nécessitant un consensus sur le format de codage.

Le but de la présente invention est d'améliorer la fiabilité de la lecture des informations imprimées sur un support, et conférant une grande souplesse de configuration du codage, tout en autorisant la lecture et l'exploitation du code avec un équipement standard et universel.

À cet effet, l'invention concerne un procédé tel que défini à la revendication 1. Un procédé de codage d'un produit consistant à apposer sur une surface d'un produit ou éventuellement d'un animal un marquage constitué par une pluralité de signes élémentaires appartenant à au moins deux types différents, ledit marquage se décomposant en une pluralité de zones de codage correspondant chacune à une information codée de nature différente, caractérisé en ce que le marquage comporte au moins une zone de configuration Cp dont le contenu est variable et spécifique de chaque gamme de produits, le contenu de ladite zone de configuration déterminant une caractéristique au moins de l'une au moins des autres zones de codage variables spécifiques au produit d'une gamme donnée.

Selon une première variante, le marquage comporte au moins une zone de configuration qui détermine le format des autres zones de codage.

Selon une deuxième variante non exclusive de la première variante, le marquage comporte au moins une zone de configuration qui détermine les attributs des autres zones de codage.

De préférence, la zone de configuration est une zone-amorce disposée au début du marquage.

Selon un mode de mise en oeuvre préféré, le marquage comporte une zone de scellement dont le contenu est déterminé par le résultat d'une fonction de chiffrement appliquée à un descripteur du produit marqué. Cette zone de scellement permet de vérifier la conformité du produit marqué et l'absence de substitution. Cette variante est particulièrement adaptée au marquage de sécurité.

Selon une variante préférée, le marquage est réalisé sous la forme d'une matrice de N colonnes de M éléments notamment binaires.

Selon un mode de mise en oeuvre particulier, le marquage est réalisé sous forme de modifications d'une zone d'une image dont les dimensions sont très supérieures à la zone de marquage.

Avantageusement, le marquage est réalisé sous forme d'une pluralité de zones Zᵢ constituée chacune par la juxtaposition d'au moins une bande codante B(i)j, chacune de ces bandes codantes étant constituée par N pixels P(i,j)k juxtaposés.

L'invention sera mieux comprise à la lecture de la description qui suit, se rapportant à un exemple non limitatif de mise en oeuvre de l'invention et se référant aux dessins annexés où :
- la figure 1 représente une vue schématique du code conforme à l'invention ;
- la figure 2 représente un exemple de marquage d'un produit codé conformément au procédé faisant l'objet de la présente invention ;

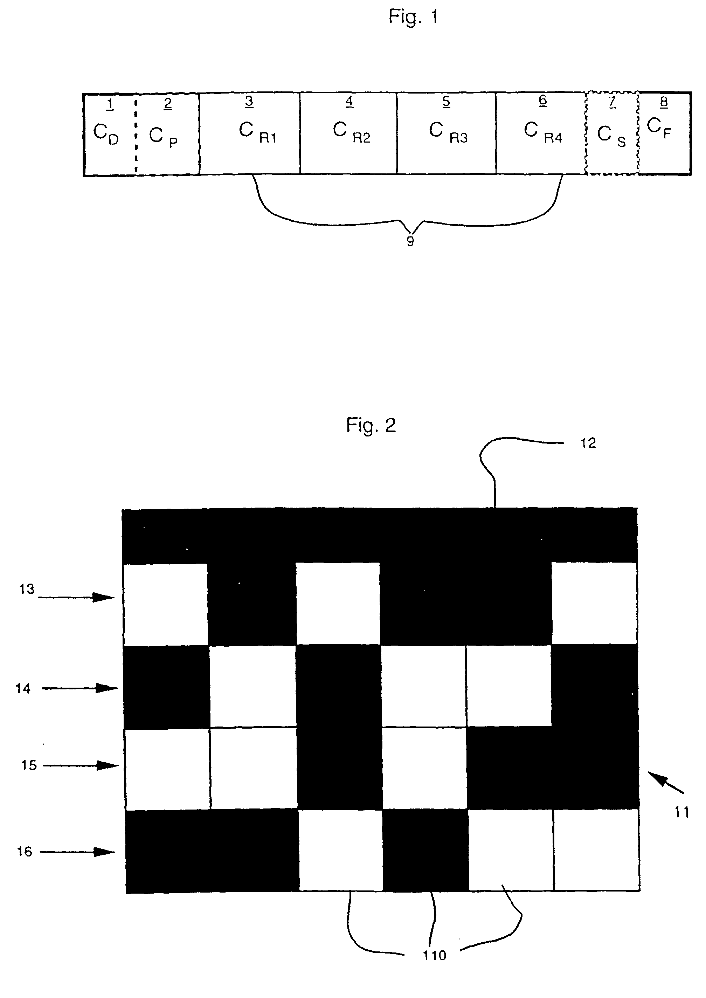

La figure 1 représente une vue schématique d'une séquence de code conforme à l'invention.

Cette séquence présente une structure configurable pour chacune des applications spécifiques. La séquence comporte une première partie invariante 1 qui est l'élément codant C_{D} de début de séquence, et une deuxième partie invariante 8 qui est l'élément codant C_{F} de début et de fin de séquence. De préférence, ces deux parties C_{D} et C_{F} sont asymétriques de façon à autoriser une lecture de la séquence dans les deux sens et de déterminer le sens de lecture afin de permettre le rétablissement du sens de lecture originel.

La séquence comporte de plus au moins une partie C_{P} de configuration 2 dont le but est de déterminer la composition du reste de la séquence.

Éventuellement, une deuxième partie C_{P'} de configuration complémentaire à la partie 2 peut être prévue avant la partie codante C_{F} 8. Elle permet d'inverser le sens de l'interprétation du corps de message.

Les parties de configuration détermine le format (longueur, type et nature d'information) de la partie médiane 9 constituant le corps du message, tant en ce qui concerne l'organisation de la partie médiane 9, qu'en ce qui concerne son contenu.

La longueur de la partie médiane 9 est libre, et déterminée par le contenu des parties de configuration C_{P}. Cette partie médiane 9 peut être unique, ou subdivisée en une pluralité de parties C_{Ri} 3 à 6 de longueurs identiques ou inégales.

Le contenu et/ou la longueur et/ou le format de chacune des parties C_{Ri} 3 à 6 est déterminée en fonction du contenu de la zone de configuration 2.

Il est possible de mémoriser une série de formats prédéfinis qui peuvent être appelés par des identifiants standardisés. Ces identifiants permettent de réduire la longueur des champ de configuration C_{P} et C_{P'}. Les formats prédéfinis peuvent être mémorisés dans une base de données à laquelle un interprétateur accède par adressage direct ou crypté, pour déterminer le format du corps de message 9.

Lorsque le champ médian 9 est subdivisé en plusieurs parties configurables C_{Ri} 3 à 6, les zones C_{P} et C_{P'} codifient la longueur et la signification de chacune des zones, selon un codage universel pour une famille de codages paramétrables.

La figure 2 représente un exemple de code imprimé en application du procédé selon l'invention.

Le code se présente sous la forme d'une matrice 11 constituée par une pluralité d'éléments binaires 110 noirs ou blanc, de forme rectangulaire dans l'exemple décrit.

La matrice est éventuellement précédée par une bande noire 12 facilitant la détection du début du code et la correction des erreurs d'alignement.

La matrice 11 est constituée par une série de colonnes 13 à 16.

Les colonnes de rang 2n-1, soit la première colonne 13 et la troisième colonne 15 sont constitués par une série d'éléments binaires correspond à un codage, par exemple au code connu sous le nom "ECO" permettant de coder les 128 symboles du standard A.S.C.I.I., sous forme de mots de 7 éléments significatifs, plus un caractère de contrôle correspondant à la parité des 7 éléments significatifs, ou un octet complet, soit 256 symboles si l'élément de parité est utilisé comme 8^{ème} élément normal (lpoids 2**8). Ce remplacement de l'élément de parité est d'autant plus logique que l'on dispose d'une redondance d'ordre 2.

Les colonnes de rang 2n sont, soit la deuxième colonne 14 et la quatrième colonne 16, sont constituées par une série d'éléments binaires correspondants chacun à l'inverse de l'élément de même rang dans la colonne précédente.

La lecture du code s'effectue comme suit:

On procède à l'acquisition d'une image à l'aide d'une caméra de type CCD. L'image est mémorisée, et éventuellement redressée par un programme de traitement d'image. Le redressement de l'image est facilité par la présence d'une première colonne 12 constituée par une bande noire, qui sert de référence pour la rotation de l'image enregistrée.

L'image numérisée est ensuite analysée de manière à générer une matrice de valeur binaire 1 ou 0. les erreurs de lecture ainsi que les dégradation du support se traduisent par des valeurs erronées. Toutefois, les dégradations affectant un type d'inscription, par exemple les éléments binaires noirs, sont généralement sans effet sur les éléments binaires inverses, en l'occurrence blanc, et vice-versa.

Ainsi, une altération du support qui provoquerait une erreur de lecture des éléments binaires noirs, mais n'affecterait pas nécessairement les éléments binaires blancs. Le traitement de l'image numérisée permettra de restituer le code original du fait de la redondance de l'information, et de la prise en compte de cette règle.

Il est possible de prévoir un chevauchement des colonnes de la matrice afin de réduire les échantillonnages erronés.

Il est également possible de prévoir que les éléments de type symétrique soient de dimensions différentes, afin d'accroître la sécurité de leur détection, ou de prévoir des éléments de type opposés présentant des formes différentes, ou encore des niveaux de gris ou de couleurs différents. Dans ce dernier cas, il est possible de définir sur un support plan une matrice à 3 ou à 4 dimensions la troisième dimension correspondant aux couleurs et la quatrième dimension correspondant à la densité.

Les applications du procédé de codage selon l'invention sont multiples.

Une première application concerne le codage de dessins et d'images, à des fins de tatouage et d'identification par exemple. Les dessins et les images sont de plus en plus utilisés en informatique. Leur représentation en mémoire ou sur le réseau pose le problème de l'universalité du codage de base. Il est intéressant de ramener cette représentation à un codage quasi universellement admis et utilisé, par exemple celui des tables ASCII. L'invention consiste, pour cette application, à analyser optiquement un dessin en le considérant comme composé de caractères ECO tels que décrit en référence à la figure 2, ces caractères étant simples et jointifs selon deux axes perpendiculaires. Ainsi, le dessin est décomposé en bandes ou rangées de colonnes de 8 matrices. Ces dernière correspondant chacune à un caractère ECO et peuvent être décrites par un octet pour représenter les 256 configurations possibles d'un segment.

Tous les traitements informatiques, notamment de correction, de scellement ou de compression du nombre d'octets peuvent s'appliquer en fonction du niveau de sécurité ou de la qualité de reproduction choisis. Cette méthode permet également de représenter sur "papier" un dessin après divers traitements informatiques à des fins de vérification ou d'archivage, et de le saisir à nouveau optiquement. Les corrections manuelles peuvent alors être prises en compte. Cette méthode peut servir à coder les textes, par exemple les télécopies, afin de permettre la sécurisation et la confidentialité des informations supportées, par scellement et chiffrement, sans identifier les éléments graphiques traités tels les caractères alphanumériques et sans les aléas des fichiers images résultant d'images ressaisies. Les dessins multiniveaux peuvent être reproduits en décomposant l'analyse en plusieurs passes (ou couches), en autant de fois qu'il a de bits pour définir les nuances de gris ou de couleurs.

Une deuxième application concernant la sécurisation de chèques. Les fraudes en matière de chèques bancaires se traduisent par la modification de la référence du bénéficiaire (identité et/ou n° de compte), les références élaborées par le fabricant des vignettes (n° de compte, n° de chèque,...), le montant du chèque, le support lui-même ou la signature. La solution à ce type de malversations par le procédé selon l'invention consiste :
- à écrire en caractère ECO, sur la vignette, et éventuellement sur les documents d'accompagnement, les données déjà existantes en clair. L'intérêt de cette solution est double. Elle permet une saisie et une vérification automatique du bien-fondé et de la cohérence des données, aux différents niveaux de traitement. Elle rend par ailleurs plus difficile toute modification des codages du fait de la finesse des points élémentaires et des calculs nécessaires pour effacer et réécrire les contrôles de cohérence.
- à sceller les informations écrite en caractère ECO, par un sceau numérique fondé sur la totalité ou une partie seulement des informations contenues sur la vignette.
- à définir un format de positionnent et d'écriture qui permette l'exploitation sécurisée des informations.
- à définir les caractères ECO d'indexation, dont la présence annonce la signification des caractères ECO qui suivent.

Selon une application particulière, les certaines au moins des zones initiales C_{D}, C_{P} et C_{R1} sont des zones signifiantes comportant une information de faible densité, exploitable avec des moyens de lecture basse-définition.

Selon une autre variante, le code comportant en plus, entre l'une des zones C_{D}, C_{P} ou C_{R1} et la zone adjacente une zone C_{A} contenant une information constituant la clé publique associée à un système de chiffrement dont la zone C_{P} désigne le type.

## Revendications

1. (modifiée) Procédé de codage d'informations sur tout type de support (objet, document, plante, animal, toute surface matérielle ou matérialisée que l'on désignera par support) à l'aide d'un marquage constitué par une pluralité de signes élémentaires appartenant à au moins deux types différents, les signes étant groupés en zones de codage, chaque zone correspondant à des informations codées différentes des autres zones de codages, la transformation des informations non codées en informations codées consistant à traiter au moins une portion des informations non codées au moyen d'une fonction d'encodage en utilisant un sceau numérique comme une clé pour produire des informations codées **caractérisé en ce qu'**il comprend les étapes consistant à :
• Définir le format d'une première zone de codage, ledit format comprenant au moins des informations sur le contenu de ladite zone de codage et sur l'organisation de ladite zone de codage
• Générer une seconde zone de codage, dite séquence de configuration correspondant audit format de la première zone de codage et déterminant les attributs des autres zones de codages
• Générer une représentation bidimensionnelle desdites première et seconde zones de codage

2. Procédé de codage d'informations selon la revendication 1 **caractérisé en ce que** le sceau numérique est basé sur au moins une partie des informations non codées.

3. Procédé de codage d'informations selon la revendication 2 **caractérisé en ce que** le sceau numérique est basé sur la totalité des informations non codées.

4. Procédé de codage d'informations selon l'une au moins des revendications précédentes **caractérisé en ce que** le marquage comporte en outre une zone correspondant à des informations consistant en une clé publique associée à une fonction d'encodage.

5. Procédé de codage d'informations selon l'une au moins des revendications précédentes **caractérisé en ce que** les informations non codées consistent en une image et **en ce que** l'étape de traitement comporte en outre le découpage de l'image en bandes et l'analyse des bandes en tant que caractères ECO.

6. Procédé de codage d'informations selon l'une au moins des revendications précédentes **caractérisé en ce que** les informations non codées consistent en l'écriture sur un chèque.

7. Procédé de codage d'informations selon l'une au moins des revendications précédentes **caractérisé en ce que** les éléments sont définis par des caractéristiques optiques sélectionnées parmi le groupe consistant en éléments binaires noirs et blancs, couleur, densité optique et une combinaison de ces différentes caractéristiques

8. (modifiée) Procédé de codage d'informations selon l'une au moins des revendications précédentes **caractérisé en ce que** ladite représentation bidimensionnelle est une matrice comportant des colonnes paires d'éléments binaires blancs et noirs et des colonnes impaires d'éléments blancs et noirs correspondant à l'inverse de l'élément de la colonne précédente.

## Patentansprüche

1. (modifiziert) Verfahren für Informationskodierung auf gleich welcher Unterlage (Objekt, Dokument, Pflanze, Tier, jede materielle oder materialisierte Oberfläche welche man als Unterlage bezeichnet) mit Hilfe einer Markierung bestehend aus einer Vielzahl von Elementarzeichen gehörend zu mindestens zwei verschiedenen Typen, die Zeichen sind gruppiert in Kodierzonen, jede Zone entsprechend von den anderen Zonen verschieden kodierte Informationen, die Umwandlung von nicht kodierten Informationen in kodierte Informationen bestehend in der Behandlung von mindestens einem Teil der nicht kodierten Informationen mittels einer Kodierfunktion gebrauchend einen numerischen Stempel als Schlüssel um kodierte Informationen zu produzieren charakterisiert dadurch dass er die Etappen beinhaltet bestehend aus:
- Das Format einer ersten Kodierzone zu definieren, besagtes Format enthaltend wenigstens Informationen über den Inhalt besagter Kodierzone und über die Organisation besagter Kodierzone
- Erzeugen einer zweiten Kodierzone, genannt Konfigurationssequenz entsprechend besagtem Format der ersten Kodierzone und bestimmend die Eigenschaften der anderen Kodierzonen
- Erzeugen einer zweidimensionalen Darstellung besagter ersten und zweiten Kodierzonen.

2. Verfahren für Informationskodierung nach Anspruch 1 charakterisiert dadurch dass der numerische Stempel sich stützt auf wenigstens einen Teil der nicht kodierten Informationen.

3. Verfahren für Informationskodierung nach Anspruch 2 charakterisiert dadurch dass der numerische Stempel sich stützt auf die Gesamtheit der nicht kodierten Informationen.

4. Verfahren für Informationskodierung nach wenigstens einem der vorangehenden Ansprüche charakterisiert dadurch dass die Markierung außerdem beinhaltet eine Zone entsprechend Informationen bestehend aus einem öffentlichen Schlüssel verbunden mit einer Kodierfunktion.

5. Verfahren für Informationskodierung nach wenigstens einem der vorangehenden Ansprüche charakterisiert dadurch dass die nicht kodierten Informationen bestehen aus einem Bild und dadurch dass die Behandlungsetappe außerdem beinhaltet das Zerschneiden der Bilder in Bänder und die Analyse der Bänder als ECO Zeichen.

6. Verfahren für Informationskodierung nach wenigstens einem der vorangehenden Ansprüche charakterisiert dadurch dass die nicht kodierten Informationen bestehen im Schreiben auf einen Scheck.

7. Verfahren für Informationskodierung nach wenigstens einem der vorangehenden Ansprüche charakterisiert dadurch dass die Elemente definiert sind durch optische Merkmale ausgewählt aus der Gruppe bestehend aus binären Elementen schwarz und weiß, Farben, optische Dichte und einer Kombination dieser verschiedenen Merkmale.

8. (modifiziert) Verfahren für Informationskodierung nach wenigstens einem der vorangehenden Ansprüche charakterisiert dadurch dass besagte zweidimensionale Darstellung eine Matrix ist beinhaltend gerade Kolonnen von binären Elementen weiß und schwarz und ungerade Kolonnen von Elementen weiß und schwarz entsprechend der Umkehr des Elements der vorhergehenden Kolonne.

## Claims

1. (Modified) Method for coding information on any type of support (object, document, plant, animal, any material or materialised surface that we will denote as support) using a marking made of a plurality of elementary signs belonging to at least two different types, the signs being grouped in coding areas, each area corresponding to coded information different from the other coding areas, the transformation of non-coded information into coded information consisting of processing at least a portion of non-coded information by means of a coding function using a digital seal such as a key to produce coded information, **characterised in that** it comprises the steps consisting of:
- Defining the format of a first coding area, the said format comprising at least information about the content of the said coding area and on the organization of the said coding area
- Generating a second coding area, the said configuration sequence corresponding to the said format of the first coding area and determining attributes of other coding areas
- Generating a two-dimensional representation of the said first and second coding areas.

2. Method for coding information according to claim 1, **characterised in that** the digital seal is based on at least a part of the non-coded information.

3. Method for coding information according to claim 2, **characterised in that** the digital seal is based on all non-coded information.

4. Method for coding information according to at least one of the previous claims, **characterised in that** the marking also comprises an area corresponding to information consisting of a public key associated with an encoding function.

5. Method for coding information according to at least one of the previous claims, **characterised in that** the non-coded information consists of an image and **in that** the processing step also comprises the breakdown of the image into strips and analysis of the strips as ECO characters.

6. Method for coding information according to at least one of the previous claims, **characterised in that** the non-coded information consists of writing on a check.

7. Method for coding information according to at least one of the previous claims, **characterised in that** the elements are defined by optical characteristics selected among the group consisting of black and white, colour, optical density binary elements or a combination of these different characteristics.

8. (Modified) Method for coding information according to at least one of the previous claims, **characterised in that** the said two-dimensional representation is a matrix comprising even columns of black and white binary elements and odd columns of white and black elements corresponding to the inverse of the element in the previous column.
